# EUROPEAN PATENT APPLICATION

(11) **EP 2 800 110 A1**
(43) Date of publication of application: **05.11.2014**
(21) Application number: 12861857.6
(22) Date of filing: 25.12.2012
(51) Int. Cl.: H01F 38/14, B60L 11/18, H02J 7/00, H02J 17/00

(54) **NON-CONTACT CHARGING DEVICE**

(30) Priority: 27.12.2011 JP 2011286506
(71) Applicant: Panasonic Corporation, Kadoma-shi, Osaka 571-8501 (JP)
(72) Inventor: SADAKATA, Hideki, 2-1-61, Shiromi, Chuo-ku, Osaka 540-6207 (JP); FUJITA, Atsushi, 2-1-61, Shiromi, Chuo-ku, Osaka 540-6207 (JP); BESSYO, Daisuke, 2-1-61, Shiromi, Chuo-ku, Osaka 540-6207 (JP)
(74) Representative: Grünecker, Kinkeldey, Stockmair & Schwanhäusser
(86) International application number: PCT/JP2012/008274
(87) International publication number: WO 2013/099221

(57) **Abstract**

A contactless battery charger is provided with a power feeding device having a power feeding coil to generate a magnetic flux using an inputted alternating current and with a power receiving device having a power receiving coil disposed so as to confront the power feeding coil. The contactless battery charger supplies an electric power using electromagnetic induction between the power feeding coil and the power receiving coil. Each of the power feeding coil and the power receiving coil is formed by winding a litz wire made up of a plurality of element wires. A width of the litz wire of the power feeding coil is smaller than a width of the litz wire of the power receiving coil in a first direction along opposing faces of the power feeding coil and the power receiving coil. The power receiving coil has an external diameter greater than or equal to that of the power feeding coil.

## Description

### Technical Field

The present invention relates to a contactless battery charger for use in charging an electrically-driven vehicle such as, for example, an electric vehicle or a plug-in hybrid vehicle.

### Background Art

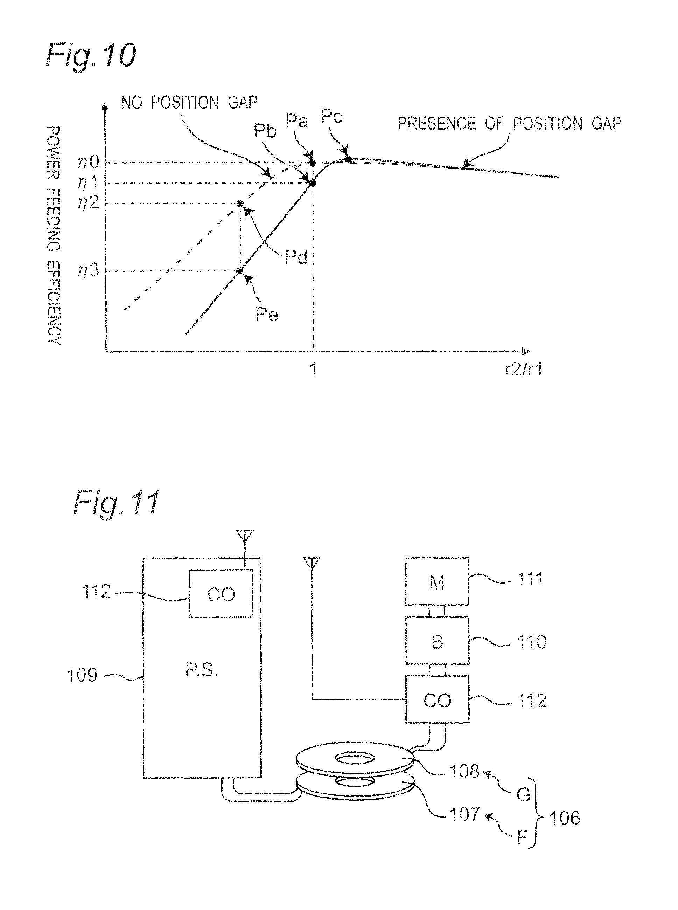

Fig. 11 is a schematic view showing a configuration of a conventional contactless battery charger 106. In Fig. 11, during power feeding, a contactless power feeding device (primary side) F connected to a power source 109 of a ground power panel is disposed so as to confront a power receiving device (secondary side) G installed on an electrically-driven vehicle through an air gap, i.e., a void space without any physical connection (that is, without any connection by a contact utilizing, for example, a wiring). In such a configuration, when a primary coil 107 (power feeding coil) provided in the power feeding device F is supplied with an alternating current to create a magnetic flux, a secondary coil (power receiving coil) 108 provided in the power receiving device G induces an electromotive force to thereby transmit an electric power from the primary coil 107 to the secondary coil 108 in a contactless state.

The power receiving device G is connected to, for example, an in-vehicle battery 110 to charge the in-vehicle battery 110 with the electric power transmitted in the above-described manner. The electric power stored in the battery 110 is used to drive an in-vehicle motor 111. During the contactless power feeding process, necessary information is exchanged between the power feeding device F and the power receiving device G through, for example, a wireless communication device 112.

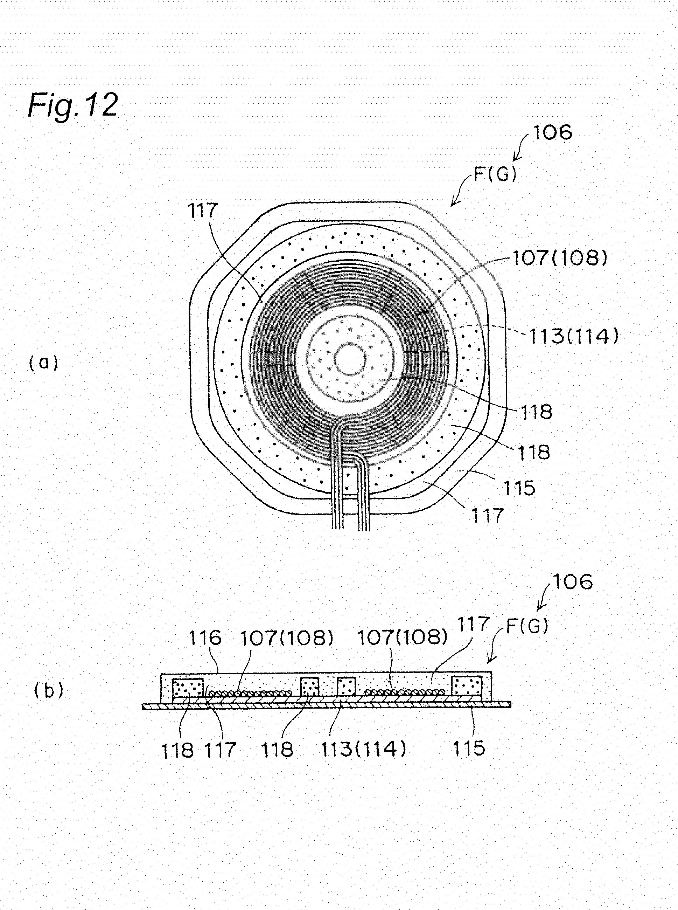

Fig. 12 is a schematic view showing an internal configuration of the power feeding device F and that of the power receiving device G. In particular, Fig. 12(a) is a schematic view showing the internal configuration of the power feeding device F as viewed from above and that of the power receiving device G as viewed from below. Fig. 12(b) is a schematic view showing the internal configuration of the power feeding device F and that of the power receiving device G as viewed from the side. In Fig. 12, reference numerals of component parts of the power receiving device G corresponding to those of the power feeding device F are indicated in parenthesis.

As shown in Fig. 12, the power feeding device F is provided with a primary coil 107, a primary magnetic core 113, a rear plate 115, a cover 116 and the like. Briefly speaking, the power receiving device G has a configuration symmetrical to that of the power feeding device F and is provided with a secondary coil 108, a secondary magnetic core 114, the rear plate 115, the cover 116 and the like. Surfaces of the primary coil 107 and the primary magnetic core 113 and those of the secondary coil 108 and the secondary magnetic core 114 are covered with and fixed by a mold resin 117 into which a blowing agent 118 was mixed.

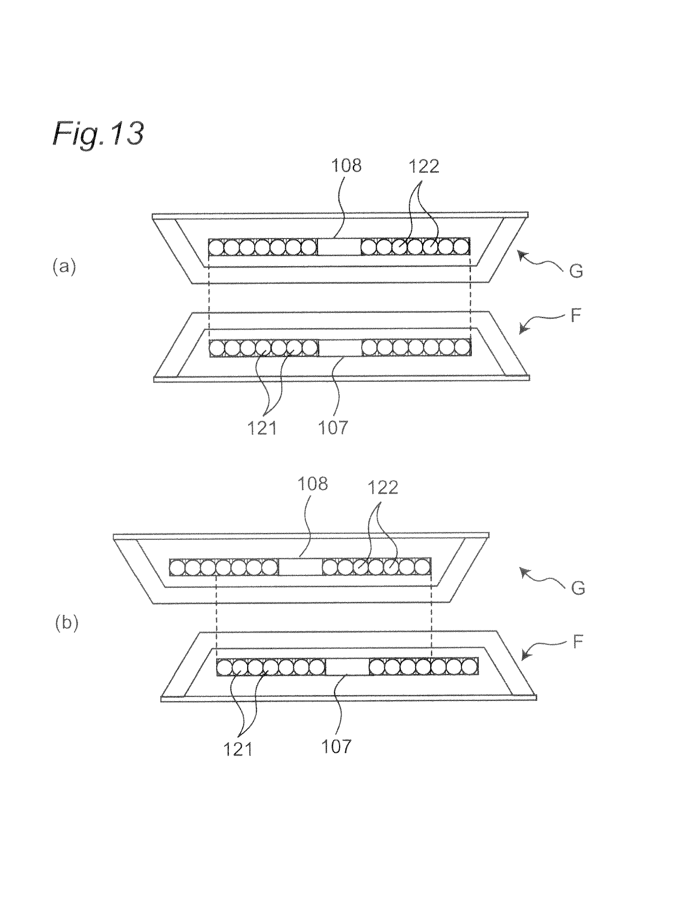

A relationship between the primary coil 107 of the conventional power feeding device F and the secondary coil 108 of the conventional power receiving device G, both referred to above, is explained hereinafter with reference to a schematic view of Fig. 13. As shown in Fig. 13(a), the primary coil 107 and the secondary coil 108 are formed by spirally winding respective litz wires 121, 122, each formed by a plurality of element wires tied together. When a vehicle is parked in a predetermined parking place, the primary coil 107 of the ground power feeding device F is disposed so as to confront the secondary coil 108 of the power receiving device G installed in the vehicle. As shown in Fig. 13(a), contactless power transmission is conducted between the primary coil 107 and the secondary coil 108, both of which confront and interlink with each other over a wide range.

### Patent Document(s)

• Patent Document 1: JP 2008-87733 A

### Summary of the Invention

### Issues to be solved by the Invention

However, as shown in Fig. 13(b), when the vehicle is parked in the parking place in a misaligned state, a position gap is created between the power feeding device F and the power receiving device G. As a result, a sufficient interlinkage region cannot be secured between the primary coil 107 and the secondary coil 108, thus posing an issue of reducing the power feeding efficiency (efficiency of electric power transmission) in the contactless power transmission.

It is accordingly an objective of the present invention to solve the above-described issue and provide a contactless battery charger capable of curbing a reduction of the power feeding efficiency (efficiency of electric power transmission) in the contactless power transmission by reducing the influence of the position gap between the power feeding device and the power receiving device.

### Means to Solve the Issues

In accomplishing the above objective, the present invention is configured as follows.

A contactless battery charger embodying the present invention comprises a power feeding device having a power feeding coil to generate a magnetic flux using an inputted alternating current; and a power receiving device having a power receiving coil disposed so as to confront the power feeding coil, wherein the contactless battery charger is operable to supply an electric power using electromagnetic induction between the power feeding coil and the power receiving coil, each of the power feeding coil and the power receiving coil is formed by winding a litz wire made up of a plurality of element wires, a width of the litz wire of the power feeding coil is smaller than a width of the litz wire of the power receiving coil in a first direction along opposing faces of the power feeding coil and the power receiving coil, and the power receiving coil has an external diameter greater than or equal to that of the power feeding coil.

### Effects of the Invention

According to the present invention, the contactless battery charger is configured such that the width of the litz wire of the power receiving coil is set to be greater than that of the litz wire of the power feeding coil and, accordingly, the power receiving coil has an external diameter greater than or equal to that of the power feeding coil. This configuration can reduce the influence of the position gap between the power feeding device and the power receiving device and curb a reduction in power feeding efficiency (efficiency of electric power transmission) during contactless power transmission.

### Brief Description of the Drawings

Fig. 1 is a block diagram of a contactless battery charger according to an embodiment of the present invention.
Fig. 2 is an outline view of the contactless battery charger of Fig. 1.
Fig. 3 is another outline view of the contactless battery charger of Fig. 1.
Fig. 4 is a cross-sectional view of a power feeding device and a power receiving device (in the presence of a position gap and in the absence of the position gap).
Fig. 5 is a cross-sectional view of a litz wire.
Fig. 6 is a top plan view showing an allowable range of the position gap.
Fig. 7 is a cross-sectional view of the power feeding device and the power receiving device (in an inclined state).
Fig. 8A is a cross-sectional view of the power feeding device and the power receiving device (modified form 1).
Fig. 8B is a cross-sectional view of the power feeding device and the power receiving device (modified form 2).
Fig. 8C is a cross-sectional view of the power feeding device and the power receiving device (modified form 3).
Fig. 9 is a cross-sectional view of coil shaping instruments.
Fig. 10 is a graph showing a relationship between the power feeding efficiency and a ratio in coil external diameter.
Fig. 11 is a schematic view showing a configuration of a conventional contactless battery charger.
Fig. 12 is a view showing an internal configuration of a power receiving device (power feeding device) disposed so as to confront a power feeding device (power receiving device) of Fig. 11.
Fig. 13 is a cross-sectional view of the power feeding device and the power receiving device of Fig. 11.

### Embodiment(s) for Carrying out the Invention

A contactless battery charger according to an embodiment of the present invention comprises a power feeding device having a power feeding coil to generate a magnetic flux using an inputted alternating current; and a power receiving device having a power receiving coil disposed so as to confront the power feeding coil, wherein the contactless battery charger is operable to supply an electric power using electromagnetic induction between the power feeding coil and the power receiving coil, each of the power feeding coil and the power receiving coil is formed by winding a litz wire made up of a plurality of element wires, a width of the litz wire of the power feeding coil is smaller than a width of the litz wire of the power receiving coil in a first direction along opposing faces of the power feeding coil and the power receiving coil, and the power receiving coil has an external diameter greater than or equal to that of the power feeding coil.

This configuration can reduce the influence of a position gap between the power feeding device and the power receiving device and curb a reduction in power feeding efficiency (efficiency of electric power transmission) during contactless power transmission.

Also, a cross-section of the litz wire of the power feeding coil is flattened in a second direction perpendicular to the opposing faces of the power feeding coil and the power receiving coil, thereby making it possible to make the external diameter of the power receiving device greater than that of the power feeding device.

Further, a cross-sectional area of the litz wire of the power feeding coil is greater than a cross-sectional area of the litz wire of the power receiving coil, thereby making it possible to reduce the weight of the power receiving coil while curbing a reduction in power feeding efficiency and to enhance the running fuel consumption when the power receiving device is installed on a vehicle or the like.

Also, a cross-section of the litz wire of the power receiving coil is flattened in the first direction. This configuration can make the external diameter of the power receiving device greater than that of the power feeding device.

Moreover, a cross-sectional area of the litz wire of the power receiving coil is less than a cross-sectional area of the litz wire of the power feeding coil, thereby making it possible to reduce the weight of the power receiving coil while curbing a reduction in power feeding efficiency and to enhance the running fuel consumption when the power receiving device is installed on a vehicle or the like.

### (Embodiments)

Embodiments of the present invention are explained hereinafter with reference to the drawings, but the present invention is not limited by the embodiments.

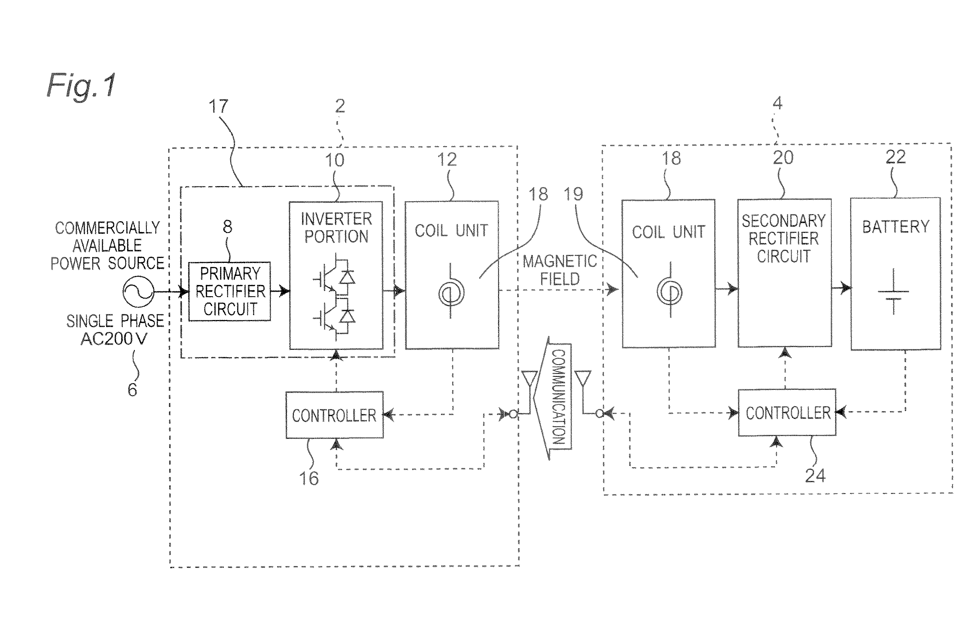

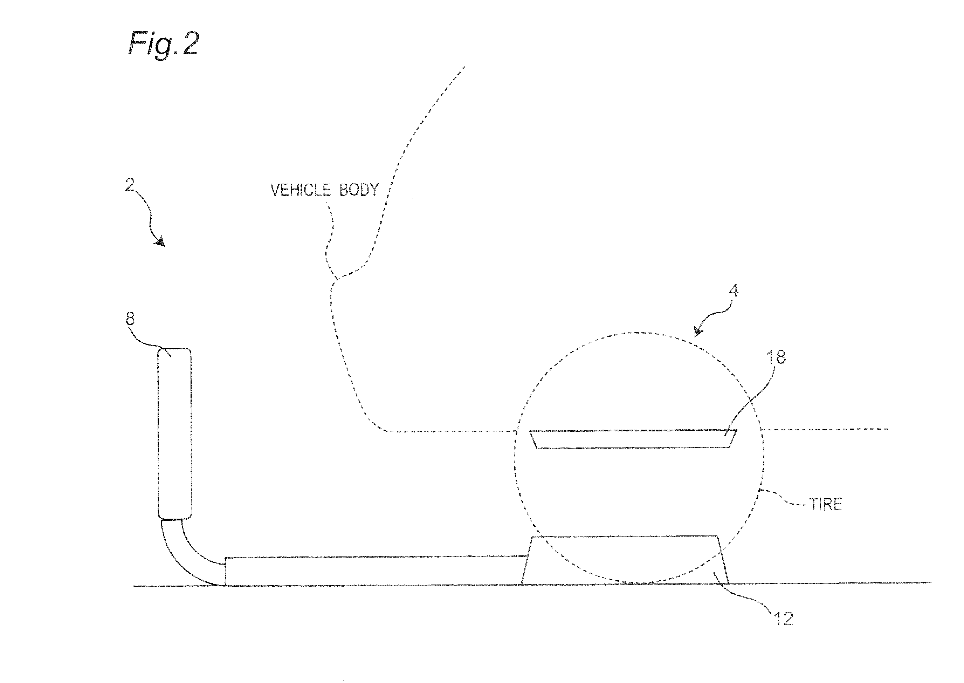

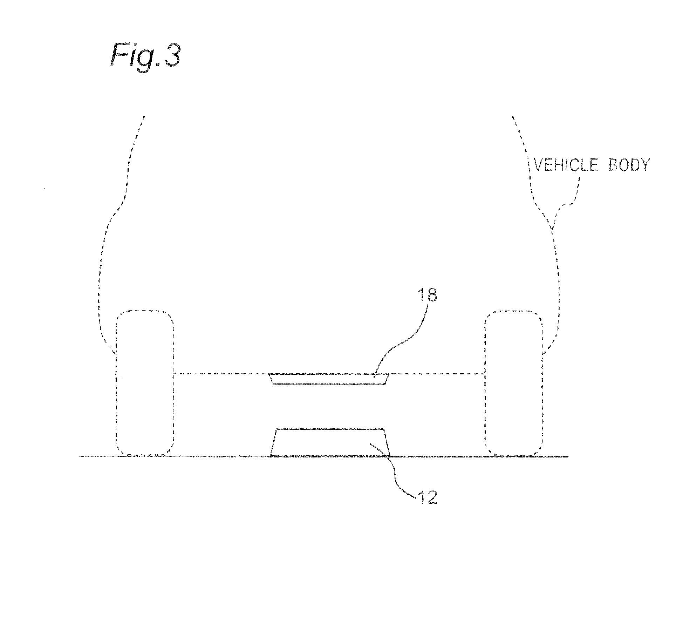

Fig. 1 is a block diagram of a contactless battery charger according to the present invention. Fig. 2 and Fig. 3 are outline views of the contactless battery charger when a vehicle (for example, an electrically-driven vehicle (vehicle body)) is parked in a parking place. As shown in Fig. 1, Fig. 2 and Fig. 3, the contactless battery charger includes a power feeding device (contactless power feeding device) 2 installed in, for example, the parking place and a power receiving device (contactless power receiving device) 4 installed in, for example, the electrically-driven vehicle.

The power feeding device 2 includes a primary rectifier circuit 8 connected to a commercially available power source 6, an inverter portion 10, a ground coil unit (primary coil unit or power feeding coil unit) 12, and a controller (for example, a microcomputer) 16. The primary rectifier circuit 8 and the inverter portion 10 constitute a power control device 17. On the other hand, the power receiving device 4 includes a vehicle side coil unit (secondary coil unit or power receiving coil unit) 18, a secondary rectifier circuit 20, a battery (load) 22, and a controller (for example, a microcomputer) 24.

In the power feeding device 2, the commercially available power source 6 is a commercially available 200-volt power source that is a low-frequency alternating-current power source connected to an input end of the primary rectifier circuit 8. An output end of the primary rectifier circuit 8 is connected to an input end of the inverter portion 10, an output end of which is connected to the ground coil unit 12. On the other hand, in the power receiving device 4, an output end of the vehicle side coil unit 18 is connected to an input end of the secondary rectifier circuit 20, an output end of which is connected to the battery 22.

Also, the ground coil unit 12 is laid on the ground and the primary rectifier circuit 8 is set upright at a location, for example, a predetermined distance away from the ground coil unit 12 (see Fig. 2). On the other hand, the vehicle side coil unit 18 is mounted on, for example, a bottom portion of the vehicle body (for example, a chassis).

The controller 16 on the side of the power feeding device 2 performs wireless communication with the controller 24 on the side of the power receiving device 4, which in turn determines a power command value in accordance with a detected residual voltage of the battery 22 and transmits the power command value so determined to the controller 16 on the side of the power feeding device 2. The power feeding device-side controller 16 compares a feeding power detected by the ground coil unit 12 with the received power command value to drive the inverter portion 10 so as to obtain the power command value.

During power feeding, the power receiving device-side controller 24 detects a received power to change the power command value transmitted to the power feeding device-side controller 16 so as not to apply an excess current or excess voltage to the battery 22.

As shown in Fig. 2 and Fig. 3, when electric power is supplied from the power feeding device 2 to the power receiving device 4, the vehicle side coil unit 18 is located so as to confront the ground coil unit 2 through an appropriate movement of the vehicle body (vehicle) and, as a result, the power feeding device-side controller 16 controls the inverter portion 10 to form a high-frequency electromagnetic field at a location between the ground coil unit 12 and the vehicle side coil unit 18. The power receiving device 4 takes the electric power from the high-frequency electromagnetic field to charge the battery 22.

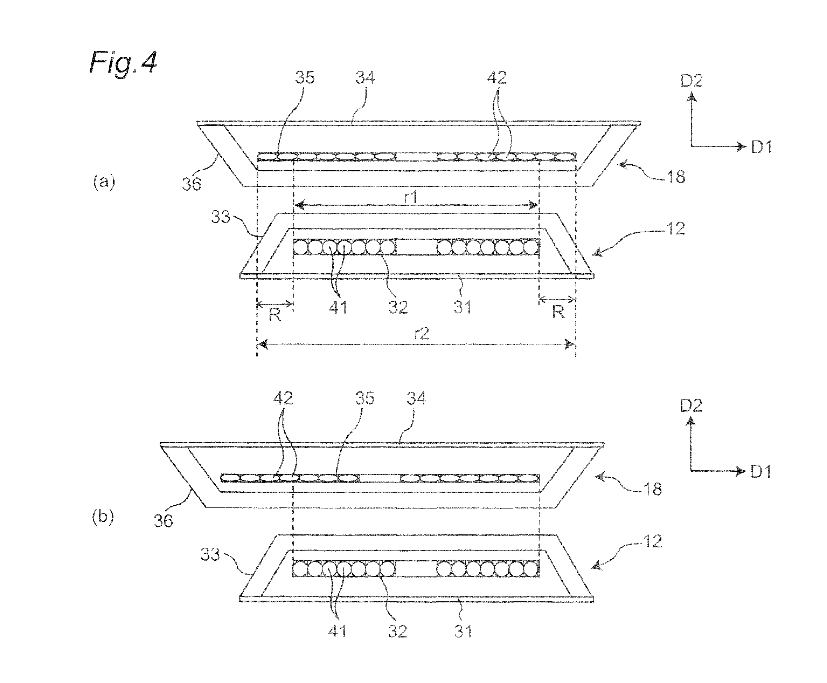

Fig. 4 is a cross-sectional view of the power ground coil unit 12 and the vehicle side coil unit 18 of the contactless battery charger in this embodiment. As shown in Fig. 4(a), the ground coil unit 12 is provided with a base 31 fixed to the ground, a power feeding coil 32 placed on the base 31, and a cover or case 33 for covering the power feeding coil 32. The vehicle side coil unit 18 is provided with a base 34 fixed to the vehicle body, a power receiving coil 35 placed on the base 34, and a cover or case 36 for covering the power receiving coil 35.

The power feeding coil 32 is formed by spirally winding a litz wire 41 multiple times and the power receiving coil 35 is similarly formed by spirally winding a litz wire 42 multiple times.

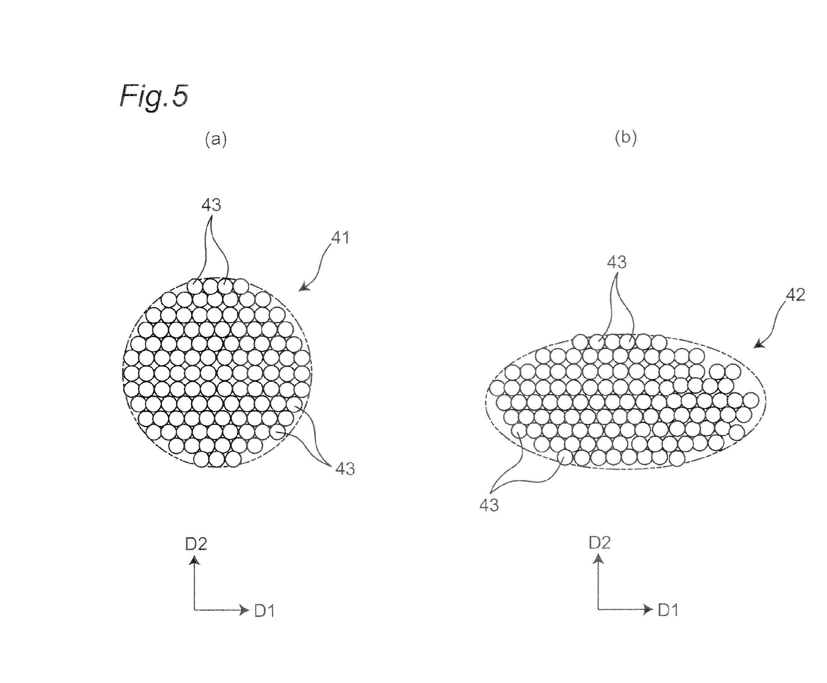

Fig. 5(a) and Fig. 5(b) are cross-sectional views of litz wires 41, 42 forming respective coils. As shown in Fig. 5(a) and Fig. 5(b), each of the litz wires 41, 42 is formed by tying a plurality of element wires 43 together. The litz wire 41 constituting the power feeding coil 32 has a generally round cross-section (see Fig. 5(a)). On the other hand, the litz wire 42 constituting the power receiving coil 35 has a flattened ellipsoidal cross-section (see Fig. 5(b)). If a direction along an opposing surface of the power feeding coil 32 and that of the power receiving coil 35 (that is, a direction along the ground surface in this embodiment) is a first direction D1 and a direction perpendicular to the opposing surfaces is a second direction D2, the litz wire 42 has an ellipsoidal cross-section flattened in the first direction D1. That is, the litz wire 42 has a cross-section that was flattened such that the width in the first direction D1 is greater than that in the second direction D2.

The power feeding coil 32 and the power receiving coil 35 are formed by winding the litz wires 41, 42 having such cross-sections by, for example, the same number of turns within the opposing surfaces of the coils. As shown in Fig. 4(a), because the litz wire 42 of the power receiving coil 35 has a cross-section flattened in the first direction D1, an external diameter (external dimension) r2 of the power receiving coil 35 is greater than an external diameter r1 of the power feeding coil 32.

The power feeding coil 32 and the power receiving coil 35 are formed by winding the litz wires 41, 42 having such cross-sections by, for example, the same length within the opposing surfaces of the coils. As shown in Fig. 4(a), because the litz wire 42 of the power receiving coil 35 has a cross-section flattened in the first direction D1, an external diameter (external dimension) r2 of the power receiving coil 35 is greater than an external diameter r1 of the power feeding coil 32.

By making the external diameter r2 of the power receiving coil 35 greater than the external diameter r1 of the power feeding coil 32 in this way, a large allowable range R in position gap between the coils can be ensured. By way of example, as shown in Fig. 4(b), even if a position gap (position gap in the first direction D1) occurs between the power feeding coil 32 and the power receiving coil 35 due to a misalignment of the vehicle relative to the parking place, it becomes possible to interlink a magnetic flux generated from the power feeding coil 32 with the power receiving coil 34 over a wide range. Accordingly, even if the position gap occurs between the coils, a reduction in power feeding efficiency can be restrained.

Also, if the number of the element wires 43 of the litz wire 42 of the power receiving coil 35 installed on the vehicle is made smaller than the number of the element wires 43 of the litz wire 41 of the power feeding coil 32 and if the cross-section of the litz wire 32 is further flattened, the weight of the power receiving coil 35 can be reduced while restraining the reduction in power feeding efficiency.

That is, in the case of (the cross-sectional area of the power receiving coil) < (the cross-sectional area of the power feeding coil), if the litz wire of the power receiving coil has a round cross-section, it comes to (the external diameter r2 of the power receiving coil) < (the external diameter r1 of the power feeding coil) and, accordingly, the number of interlinkage of the magnetic flux generated from the power feeding coil with the power receiving coil reduces, thus resulting in a reduction in power feeding efficiency. Because of this, the power feeding efficiency is likely to reduce, particularly, under the influence of the position gas.

On the other hand, the power receiving device according to the present invention has the power receiving coil 35 flattened in the first direction D1. By doing so, even in the case of (the cross-sectional area of the power receiving coil) < (the cross-sectional area of the power feeding coil), it becomes possible to make (the external diameter r2 of the power receiving coil) > (the external diameter r1 of the power feeding coil). Accordingly, the number of interlinkage of the magnetic flux generated from the power feeding coil 32 with the power receiving coil 35 can be made greater than the case where the litz wire 42 of the power receiving coil 35 has a round cross-section, thus making it possible to increase the power feeding efficiency. As a result, the power feeding efficiency can be enhanced, particularly, with a reduction of the influence of the position gap.

Further, the above-described configuration of the power receiving coil 35 can reduce the weight of the power receiving device 4, enhance the running fuel consumption of, for example, an electrically-driven vehicle, and reduce the cost.

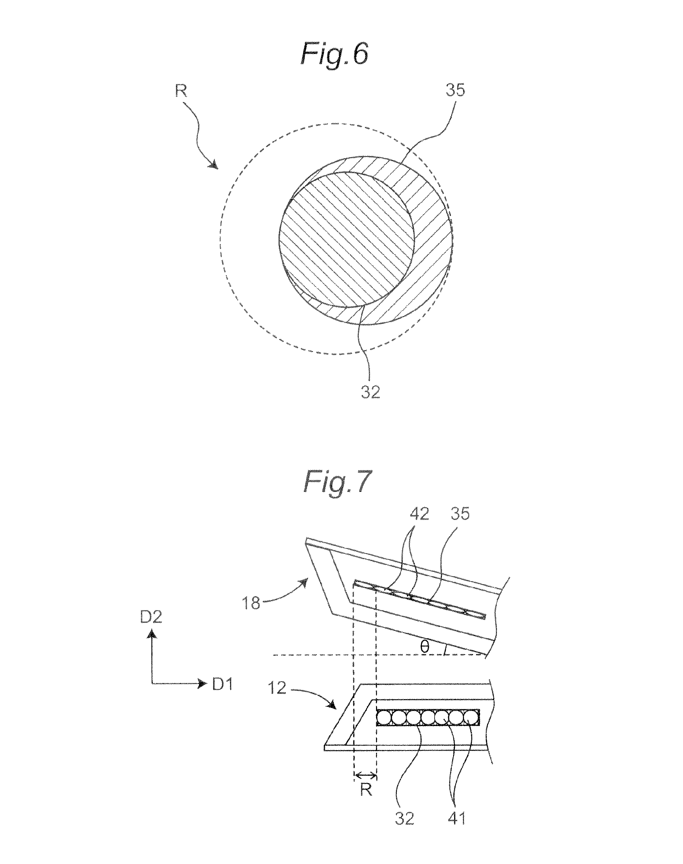

Also, as shown in Fig. 6, the allowable range R of the position gap referred to above is generally in the form of a circle as viewed from above. The allowable range R of the position gap is not limited solely to the case where it is the same as the external diameter r2 of the power receiving coil 35 and is set to an appropriate range based on the required power feeding efficiency, the external diameters of the power feeding coil 32 and the power receiving coil 35, and the like.

As shown in Fig. 7, if one of the power receiving coil 35 and the power feeding coil 32 is inclined relative to the other, a determination can be made as to whether or not the position gap falls within the allowable range R based on the projected area of the power receiving coil 35 projected onto the power feeding coil 32. Accordingly, it is preferred that the allowable range R of the position gap be set based on the required power feeding efficiency, the angle of inclination θ and the like.

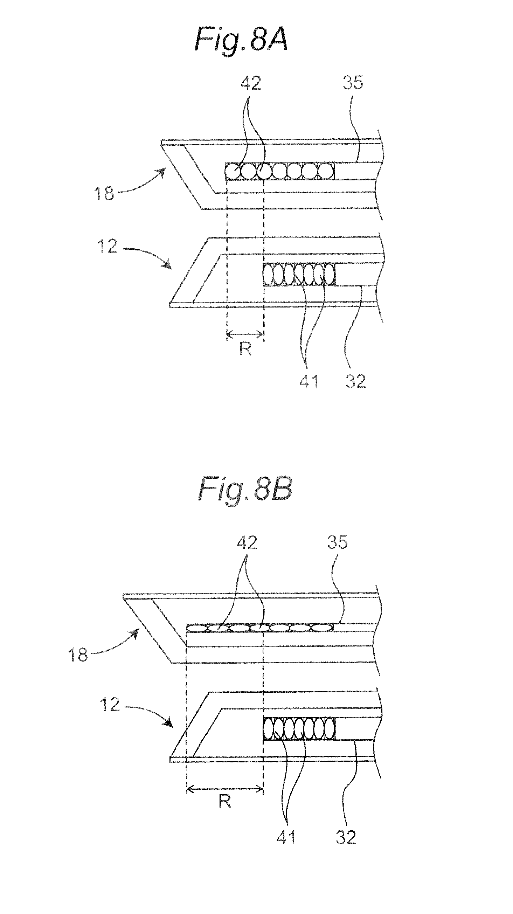

It is to be noted that the present invention is not limited to the embodiment referred to above and is practicable in various forms. By way of example, as shown in Fig. 8A (modified form 1), the external diameter of the power receiving coil 35 may be made greater than that of the power feeding coil 32 by flattening the cross-section of the litz wire 41 of the power feeding coil 32 in the second direction D2.

Also, as shown in Fig. 8B (modified form 2), the external diameter of the power receiving coil 35 may be made greater than that of the power feeding coil 32 by flattening the litz wire 42 of the power receiving coil 35 in the first direction D1 and by flattening the litz wire 41 of the power feeding coil 32 in the second direction D2.

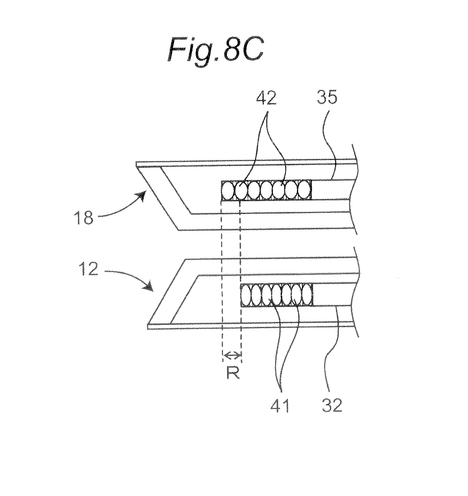

Further, as shown in Fig. 8C (modified form 2), the external diameter of the power receiving coil 35 may be made greater than that of the power feeding coil 32 by flattening both the litz wires 41, 42 in the second direction D2 and by making the width of the litz wire 42 of the power receiving coil 35 along the first direction D1 greater than the width of the litz wire 41 of the power feeding coil 32 along the first direction D1.

That is, the external diameter of the power receiving coil 35 can be made greater than that of the power feeding coil 32 by flattening the cross-section of one or both the litz wire 42 of the power receiving coil 35 and the litz wire 41 of the power feeding coil 32 to make the width of the litz wire 42 along the first direction D1 greater than that of the litz wire 41. The numbers of turns of the litz wires of the coils 32, 35 are not always the same, but they may be different from each other.

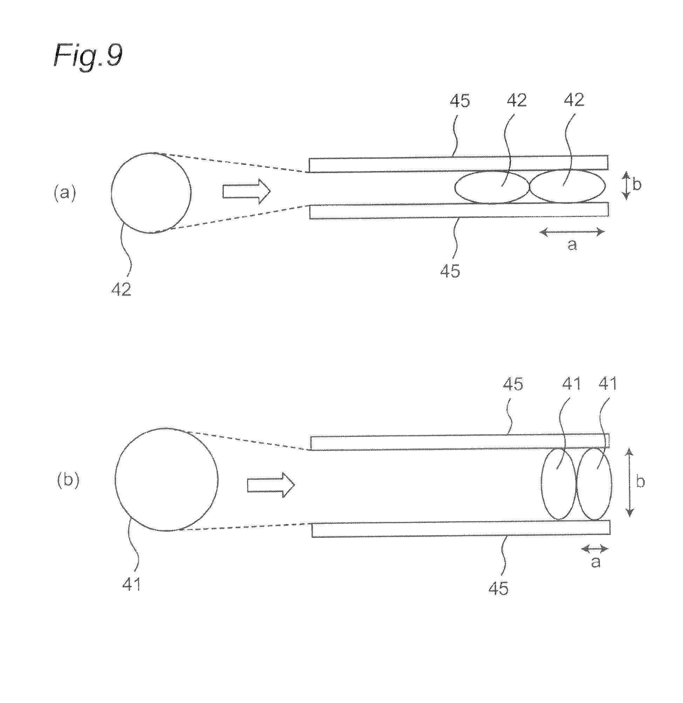

As shown in, for example, Fig. 9(a) and Fig. 9(b), such flattening of the litz wires 41, 42 is realized by sandwiching each of the litz wires 41, 42 between two coil shaping instruments 45 each made up of a plate-like member and by subsequently spirally winding the litz wires 41, 42 while compressing them. If the width of each of the litz wires 41, 42 is indicated by (a) in the first direction D1 and (b) in the second direction D2, it is preferred that the width (a) of the litz wire 42 of the power receiving coil 35 be greater than the width (a) of the litz wire 41 of the power feeding coil 32. Also, if the litz wires 41, 42 have the same cross-sectional area, it is preferred that a value of b/a of the power receiving coil 35 be less than that of the power feeding coil 32.

Fig. 10 is a graph showing a relationship between the power feeding efficiency in the contactless battery charger according to this embodiment and a ratio (r2/r1) between the external diameter r1 of the power feeding coil 32 and the external diameter r2 of the power receiving coil 35.

In Fig. 10, a dotted line and a solid indicate the power feeding efficiencies in the case where no position gap occurs between the power feeding coil 32 and the power receiving coil 35 and in the case where a position gap occurs, respectively (in the presence of the position gap and in the absence of the position gap). If r2/r1=1 (that is, the external diameter r2 of the power receiving coil 35 is equal to the external diameter r1 of the power feeding coil 32), the power feeding efficiency reduces from an efficiency η0 (point Pa in Fig. 10) in the absence of the position gap to an efficiency η1 (point Pb in Fig. 10) in the presence of the position gap.

In order to reduce the weight of the power receiving coil 35, if the power receiving coil 35 is formed so as to have a smaller diameter than the power feeding coil 32 (that is, if r2/r1<1), the power feeding efficiency reduces from the efficiency η0 (point Pa in Fig. 10) to an efficiency η2 (point Pd in Fig. 10) in the absence of the position gap and to an efficiency η3 (point Pe in Fig. 10) in the presence of the position gap.

On the other hand, if r2/r1 =1, the efficiency η0 (point Pa in Fig. 10) in the absence of the position gap reduces to the efficiency η1 (point Pb in Fig. 10) in the presence of the position gap, but the reduction in power feeding efficiency can be restrained as compared with the case of r2/r1 <1.

Further, if r2/r1>1 and even if the position gap occurs, the efficiency can be made nearly equal to η0 (point Pc in Fig. 10). That is, a range within which the reduction in power feeding efficiency can be restrained in the event of the position gap can be set widely by making the external diameter r2 of the power receiving coil 35 greater than the external diameter r1 of the power feeding coil 32.

Accordingly, in the contactless battery charge according to this embodiment, the reduction in power feeding efficiency in the event of the position gap can be restrained by setting the external diameter of the power receiving coil 35 to be greater than or equal to that of the power feeding coil 32 (that is, r2≧ r1 or r2/r1≧ 1). Also, the reduction in power feeding efficiency in the event of the position gap can be more effectively restrained by setting the external diameter of the power receiving coil 35 to be greater than that of the power feeding coil 32 (that is, r2>r1 or r2/r1 >1).

In the contactless battery charge according to this embodiment, the external diameter of the power receiving coil 35 can be made greater than that of the power feeding coil 32 by flattening the cross-sections of the litz wires 41, 42 constituting the power feeding coil 32 and the power receiving coil 35. By doing so, the allowable range R of the position gap, within which the required power feeding efficiency can be obtained if the position gap occurs between the power feeding coil 32 and the power receiving coil 35, can be widened.

Also, by flattening the litz wire 42 of the power receiving coil 35 in the first direction D1, the cross-section of the litz wire 42 can be reduced while restraining the reduction in power feeding efficiency, thereby making it possible to reduce the weight of the power receiving coil 35 installed on a vehicle and enhance the running fuel consumption of an electrically-driven vehicle.

As just described, in the contactless battery charger according to this embodiment, by flattening the cross-sections of the litz wires 41, 42 and not by merely increasing the external shape of the power receiving coil, the external diameter of the power receiving coil 35 can be made greater than that of the power feeding coil 32 while restraining an increase in weight of the power receiving coil 35 installed on the vehicle. Accordingly, while restraining the increase in weight of the power receiving coil 35 installed on the vehicle, the influence of the position gap between the power feeding coil 32 and the power receiving coil 35 can be reduced, thereby making it possible to restrain the reduction in power feeding efficiency during contactless power transmission.

Although in the above explanation the litz wires 41, 42 have been described as having an ellipsoidal cross-section by, for example, flattening, the litz wires may have a flattened rectangular cross-section.

Also, although the power feeding coil 32 and the power receiving coil 35 have been described as having a round external shape as an example, they may have a polygonal external shape.

Further, although the generally annular power feeding coil 32 and the generally annular power receiving coil 35 have been described as having nearly the same internal diameter as an example, the power receiving coil 35 may be enlarged radially inwardly.

Although in the above explanation the power feeding device 2 and the power receiving device 4 have been described as being laid on the ground and installed on a vehicle, respectively, as an example, the present invention is also applicable to the case where the power receiving device is laid on the ground and the power feeding device is installed on the vehicle.

Any combination of the various embodiments referred to above can produce respective effects.

Although the present invention has been fully described by way of preferred embodiments with reference to the accompanying drawings, it is to be noted here that various changes and modifications will be apparent to those skilled in the art. Therefore, unless such changes and modifications otherwise depart from the scope of the present invention as set forth in the appended claims, they should be construed as being included therein.

The contents of a specification, drawings and claims of a Japanese patent application No. 2011-286506 filed December 27, 2011 are herein expressly incorporated by reference in their entirety.

### Industrial Applicability

Because the present invention can curb the power feeding efficiency (efficiency of electric power transmission) in the contactless power transmission by reducing the influence of the position gap between the power feeding device and the power receiving device, the present invention is applicable to a power feeding device and a power receiving device of contactless power transmission for use in charging an electrically-driven vehicle such as, for example, an electric vehicle or a plug-in hybrid vehicle.

### Explanation of Reference Numerals

- 2: power feeding device
- 4: power receiving device
- 6: commercially available power source
- 8: primary rectifier circuit
- 10: inverter portion
- 12: ground coil unit
- 16: controller
- 17: power control device
- 18: vehicle side coil unit
- 20: secondary rectifier circuit
- 22: battery
- 24: controller
- 31: base
- 32: power feeding coil
- 33: cover
- 34: base
- 35: power receiving coil
- 36: cover
- 41: litz wire
- 42: litz wire
- 43: element wire
- R: allowable range of position gap

## Claims

1. A contactless battery charger comprising:
a power feeding device having a power feeding coil to generate a magnetic flux using an inputted alternating current; and
a power receiving device having a power receiving coil disposed so as to confront the power feeding coil, wherein
the contactless battery charger is operable to supply an electric power using electromagnetic induction between the power feeding coil and the power receiving coil,
each of the power feeding coil and the power receiving coil is formed by winding a litz wire made up of a plurality of element wires,
a width of the litz wire of the power feeding coil is smaller than a width of the litz wire of the power receiving coil in a first direction along opposing faces of the power feeding coil and the power receiving coil, and
the power receiving coil has an external diameter greater than or equal to that of the power feeding coil.

2. The contactless battery charger according to claim 1, wherein a cross-section of the litz wire of the power feeding coil is flattened in a second direction perpendicular to the opposing faces of the power feeding coil and the power receiving coil.

3. The contactless battery charger according to claim 1 or 2, wherein a cross-sectional area of the litz wire of the power feeding coil is greater than a cross-sectional area of the litz wire of the power receiving coil.

4. The contactless battery charger according to claim 1, wherein a cross-section of the litz wire of the power receiving coil is flattened in the first direction.

5. The contactless battery charger according to claim 1 or 4, wherein a cross-sectional area of the litz wire of the power receiving coil is less than a cross-sectional area of the litz wire of the power feeding coil.
